# EUROPÄISCHE PATENTSCHRIFT

(11) **EP 1 174 655 B1**
(45) Veröffentlichungstag und Bekanntmachung des Hinweises auf die Patenterteilung: **27.10.2004**
(21) Anmeldenummer: 01114532.3
(22) Anmeldetag: 16.06.2001
(51) Int. Cl.: F16L 58/18

(54) **Schutzvorrichtung für eine muffenartige Rohrverbindung**
Protection device for a pipe joint of the bell and spigot type
Dispositif de protection pour un raccord de tuyaux du type emboîtement

(30) Priorität: 22.07.2000 DE 20012720 U
(43) Veröffentlichungstag der Anmeldung: 23.01.2002
(73) Patentinhaber: Weberit-Werke Dräbing GmbH, 57641 Oberlahr (DE)
(72) Erfinder: Dräbing, Norbert, 56587 Oberraden (DE)
(74) Vertreter: Kossobutzki, Walter, Dipl.-Ing.(FH)

(56) Entgegenhaltungen:
- WO-A-00/61982
- DE-B- 1 256 005
- US-A- 6 039 359
- PATENT ABSTRACTS OF JAPAN vol. 1997, no. 10, 31. Oktober 1997 (1997-10-31) & JP 09 159094 A (FUJI POLYMER KK;KUBOTA CORP), 17. Juni 1997 (1997-06-17)

## Beschreibung

Die Erfindung bezieht sich auf eine Vorrichtung zum Schutz der muffenartigen Verbindungsstelle zweier zusammengesteckter Rohre, bestehend aus einer über die Verbindungsstelle aufschiebbaren, abgestuften Manschette aus elastischem Werkstoff.

Für den Transport von Wasser, sowohl Trink- und Brauchwasser, als auch für Gase, Öle und sonstige Medien in Leitungen werden Rohre aus Gußeisen, Stahl oder Kunststoff verwendet. Für das Verbinden dieser Rohre ist an ein Ende eines Rohres eine Muffe angeformt, in die dann das normale Ende eines anderen Rohres unter Verwendung einer Dichtung eingesteckt wird. Derartige Rohre werden entweder im Erdreich oder offen verlegt. Vielfach wird die muffenartige Verbindungsstelle zweier zusammengesteckter Rohre durch eine abgestufte Manschette aus elastischem Werkstoff, beispielsweise Gummi oder Kunststoff abgedeckt (siehe, zum Beispiel, Dokument DE-A-1 256 005). Diese Manschette wird vor dem Zusammenstecken der Rohre auf das normale, muffenlose Ende eines Rohres aufgeschoben. Nachdem dieses Rohr dann in die angeformte Muffe des anderen Rohres eingeschoben wurde, wird die Manschette mit ihrem größeren Querschnitt über die Muffe geschoben, so dass die Manschette einerseits die angeformte Muffe des einen Rohres und das muffenlose Ende des anderen Rohres umschließt. Dadurch wird die Rohrverbindung gegen Grundwasser und Schmutz geschützt. Dieser Schutz setzt voraus, dass die Manschette gut dichtend an der Muffe des einen Rohres und dem muffenlosen Ende des anderen Rohres anliegt. Dies bringt es mit sich, dass sich die Manschetten nur mit verhältnismäßig hoher Kraftanstrengung und bei einer erheblichen Verletzungsgefahr im Hand- und Fingerbereich montieren lassen.

Der Erfindung liegt deshalb die Aufgabe zugrunde, eine Vorrichtung zum Schutz der muffenartigen Verbindungsstelle zweier zusammengesteckter Rohre zu schaffen, die sich verhältnismäßig leicht und ohne Verletzungsgefahr montieren läßt aber dennoch eine ausreichend hohe Dichtigkeit gegen äußere Einflüsse, wie Grundwasser und Schmutz, aufweist.

Zur Lösung dieser Aufgabe wird gemäß der Erfindung bei einer Vorrichtung der eingangs beschriebenen Gattung vorgeschlagen, dass die Manschette auf ihrer Außenfläche mindestens eine sich in axialer Richtung erstreckende und jeweils mit kurzem Abstand vor den beiden Stirnflächen der Manschette endende, rippenartige Ausformung aufweist.

Bei einer solchen Ausgestaltung der Vorrichtung legt sich die Manschette mit ihren ringförmigen Mantelflächen im Bereich der Ausformung elastisch an der Muffe und dem Rohr an. Durch die rippenartige Ausformung bedingt, weist die Muffe in diesem Bereich eine verhältnismäßig hohe Rückstellkraft auf. Eine solche Manschette läßt sich verhältnismäßig leicht, also ohne übermäßige Kraftanstrengung montieren und die Gefahr von Verletzungen im Hand- und Fingerbereich wird erheblich reduziert.

Weitere Merkmale einer Vorrichtung gemäß der Erfindung sind in den Ansprüchen 2 bis 9 offenbart.

Die Erfindung wird nachfolgend anhand eines in einer Zeichnung dargestellten Ausführungsbeispieles näher erläutert. Dabei zeigen
- Fig. 1: eine Aufrißdarstellung einer erfindungsgemäßen Vorrichtung im Halbschnitt und
- Fig. 2: einen Schnitt durch die Vorrichtung der Fig. 1 entlang der Linie II-II.

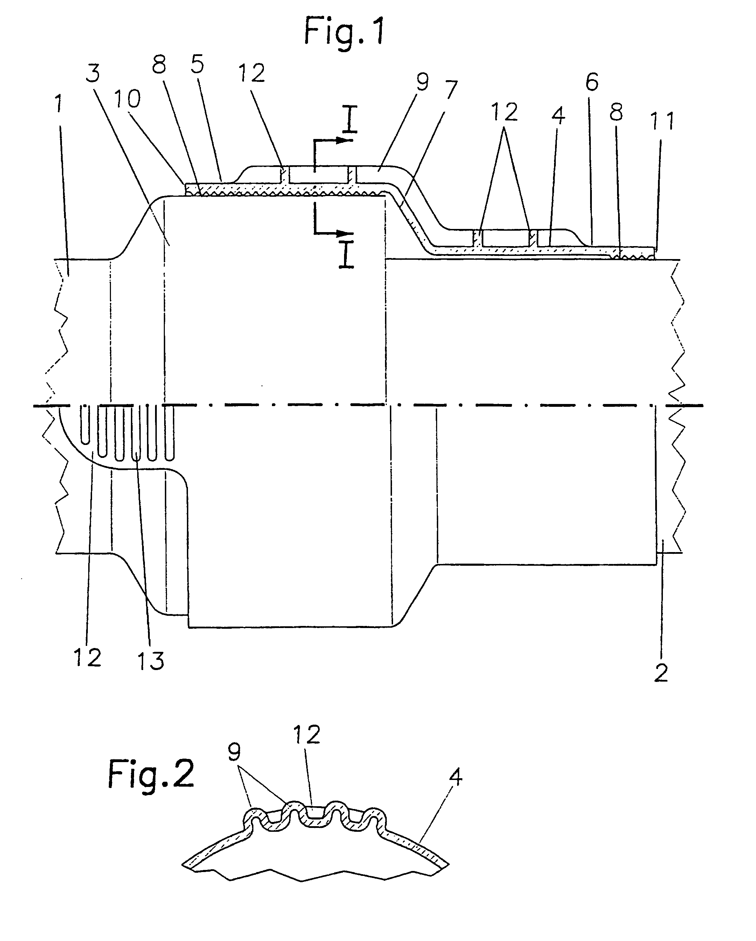

In der Fig. 1 der Zeichnung sind zunächst zwei Rohre 1, 2 ausschnittsweise mit ihrem Verbindungsbereich dargestellt. Beide Rohre 1, 2 weisen den gleichen Querschnitt auf. Das eine Ende des Rohres 1 ist, wie dargestellt, mit einer Muffe 3 einstückig ausgebildet, in die das Rohr 2 unter Zwischenschaltung einer an sich bekannten, nicht dargestellten Dichtung eingesteckt ist. Bevor die beiden Rohre 1, 2 so zusammengesteckt werden, wird über das Rohr 2 eine Manschette 4 aus thermoplastischem Kunststoff aufgeschoben.

Diese Manschette 4 ist abgestuft ausgebildet und besteht aus einem Ring 5 mit einem dem Außendurchmesser der Muffe 3 entsprechenden Innendurchmesser und einem Ring 6, der einen dem Außendurchmesser des Rohres 2 angepaßten Innendurchmesser besitzt. Die beiden Ringe 5, 6 sind über ein konisches Teil 7 miteinander verbunden. An den Innenflächen der Ringe 5, 6 der Manschette 4 können Lippen 8 vorgesehen sein, über die die Manschette 4 einerseits an dem Rohr 2 und andererseits an der Muffe 3 anliegt. Die Manschette 4 ist in dem gezeichneten Ausführungsbeispiel in ihrem oberen Bereich mit vier mit Abstand voneinander angeordneten, rippenartigen Ausformungen 9 versehen, deren Querschnitt die Fig. 2 der Zeichnung deutlich erkennen läßt. Diese rippenartigen Ausformungen 9 haben in diesem Ausführungsbeispiel die gleiche Wandstärke wie der übrige Bereich der Manschette 4. Die rippenartigen Ausformungen 9 befinden sich normalerweise auch an der diametral gegenüberliegenden Seite der Manschette 4; diese sind jedoch in der Fig. 1 nicht dargestellt. Die rippenartigen Ausformungen 9 besitzen im dargestellten Ausführungsbeispiel alle den gleichen Querschnitt und enden mit Abstand vor den beiden Stirnflächen 10, 11 der Manschette 4. Es ist grundsätzlich möglich, auch nur eine rippenartige Ausformung 9 vorzusehen oder die rippenartigen Ausformungen 9 über den gesamten Umfang der Manschette 4 anzuordnen. Zwischen den einzelnen Ausformungen 9 der Manschette 4 können an der Außenseite kleine Rippen 12 vorgesehen sein. Durch diese Rippen 12 läßt sich die Dehnfähigkeit der rippenartigen Ausformungen 9 beeinflussen.

Wie bereits weiter oben erwähnt, wird die Manschette 4 vor dem Zusammenstecken der Rohre 1, 2 auf das Rohr 2 aufgeschoben und zwar so weit, dass der Ring 5 der Manschette 4 das Zusammenstecken der Rohre 1, 2 nicht beeinträchtigt. Sobald diese Verbindung hergestellt ist, wird die Manschette 4 in die in Fig. 1 gezeichnete Lage verschoben. Um dieses Verschieben bzw. Aufschieben der Manschette 4 zu erleichtern, schließt sich an die Stirnfläche 10 des Ringes 5 der Manschette 4 ein lappenartiger Vorsprung 12 an, der an seiner Außenfläche mit Erhebungen 13 versehen ist. Über diesen Vorsprung 12 kann die Manschette 4 in die angestrebte Lage gezogen bzw. zusätzlich gezogen werden. Die Erhebungen 13, die hier als Rippen ausgebildet sind, haben den Zweck, die Manschette 4 für den Aufschiebevorgang sicher erfassen zu können.

Um dieses Erfassen und Aufziehen zu verbessern, ist ein weiterer lappenartiger Vorsprung 12 vorgesehen, der gegenüber dem in der Fig. 1 erkennbaren Vorsprung 12 um 180° versetzt ist.

## Patentansprüche

1. Vorrichtung zum Schutz der muffenartigen Verbindungsstelle zweier zusammengesteckter Rohre, bestehend aus einer über die Verbindungsstelle aufschiebbaren, abgestuften Manschette (4) aus elastischem Werkstoff,
**dadurch gekennzeichnet,**
**dass** die Manschette (4) auf ihrer Außenfläche mindestens eine sich in axialer Richtung erstreckende und jeweils mit kurzem Abstand vor den beiden Stirnflächen (10, 11) der Manschette (4) endende, rippenartige Ausformung (9) aufweist.

2. Vorrichtung nach Anspruch 1,
**dadurch gekennzeichnet,**
**dass** die Manschette (4) mit mindestens zwei sich diametral gegenüberliegenden rippenartigen Ausformungen (9) versehen ist.

3. Vorrichtung nach Anspruch 1 oder 2,
**dadurch gekennzeichnet,**
**dass** über den gesamten Umfang der Manschette (4) rippenartige Ausformungen (9) vorgesehen sind.

4. Vorrichtung nach mindestens einem der Ansprüche 1 bis 3,
**dadurch gekennzeichnet,**
**dass** die rippenartigen Ausformungen (9) gleichen Querschnitt und/oder gleiche Länge aufweisen.

5. Vorrichtung nach mindestens einem der Ansprüche 1 bis 4,
**dadurch gekennzeichnet,**
**dass** zumindest zwei benachbarte rippenartige Ausformungen (9) durch mindestens eine Rippe (12) miteinander verbunden sind.

6. Vorrichtung nach mindestens einem der Ansprüche 1 bis 5,
**dadurch gekennzeichnet,**
**dass** sich an die einen größeren Querschnitt aufweisende Stirnfläche (10) der Manschette (4) mindestens ein lappenartiger Vorsprung (12) anschließt.

7. Vorrichtung nach Anspruch 6,
**dadurch gekennzeichnet,**
**dass** der Vorsprung (12) an seiner Außen- oder Innenfläche mit mehreren Erhebungen (13) versehen ist.

8. Vorrichtung nach Anspruch 7,
**dadurch gekennzeichnet,**
**dass** die Erhebungen (13) als in Umfangsrichtung der Manschette (4) verlaufende Rippen ausgebildet sind.

9. Vorrichtung nach mindestens einem der Ansprüche 1 bis 8,
**dadurch gekennzeichnet,**
**dass** die Manschette (4) zumindest im Bereich vor den stirnseitigen Enden (10, 11) mit umlaufenden Lippen (8) versehen ist.

## Claims

1. Device for protecting the socket-like connecting point of two fitted-together pipes, consisting of a stepped sleeve (4) which can be pushed on over the connecting point and is made of an elastic material, **characterized in that** the sleeve (4), on its outer surface, has at least one rib-like corrugation (9) extending in the axial direction and ending in each case at a short distance before the two end faces (10, 11) of the sleeve (4).

2. Device according to Claim 1, **characterized in that** the sleeve (4) is provided with at least two diametrically opposite rib-like corrugations (9).

3. Device according to Claim 1 or 2, **characterized in that** rib-like corrugations (9) are provided over the entire circumference of the sleeve (4).

4. Device according to at least one of Claims 1 to 3, **characterized in that** the rib-like corrugations (9) have the same cross section and/or the same length.

5. Device according to at least one of Claims 1 to 4, **characterized in that** at least two adjacent rib-like corrugations (9) are connected to one another by at least one rib (12).

6. Device according to at least one of Claims 1 to 5, **characterized in that** at least one tab-like projection (12) adjoins that end face (10) of the sleeve (4) which has a larger cross section.

7. Device according to Claim 6, **characterized in that** the projection (12) is provided with a plurality of prominences (13) on its outer or inner surface.

8. Device according to Claim 7, **characterized in that** the prominences (13) are designed as ribs running in the circumferential direction of the sleeve (4).

9. Device according to at least one of Claims 1 to 8, **characterized in that** the sleeve (4) is provided with encircling lips (8) at least in the region before the end faces (10, 11).

## Revendications

1. Dispositif de protection du point de raccordement de type manchon de deux tuyaux emboîtés mutuellement, se composant d'une manchette (4) étagée, pouvant être enfoncée par-dessus le point de raccordement, en matériau élastique,
**caractérisé en ce que**
la manchette (4) présente sur sa face extérieure au moins une formation (9) de type nervurée, s'étendant dans la direction axiale et se terminant à chaque fois à courte distance des deux faces frontales (10, 11) de la manchette (4).

2. Dispositif selon la revendication 1,
**caractérisé en ce que**
la manchette (4) est pourvue d'au moins deux formations (9) de type nervuré diamétralement opposées.

3. Dispositif selon la revendication 1 ou 2,
**caractérisé en ce que**
l'on prévoit sur tout le pourtour de la manchette (4) des formations (9) de type nervuré.

4. Dispositif selon au moins l'une quelconque des revendications 1 à 3,
**caractérisé en ce que**
les formations (9) de type nervuré présentent la même section transversale et/ou la même longueur.

5. Dispositif selon au moins l'une quelconque des revendications 1 à 4,
**caractérisé en ce qu'**
au moins deux formations (9) de type nervuré sont connectées l'une à l'autre par au moins une nervure (12).

6. Dispositif selon au moins l'une quelconque des revendications 1 à 5,
**caractérisé en ce qu'**
au moins une saillie de type patte (12) se raccorde à la face frontale (10) de la manchette (4) présentant une grande section transversale.

7. Dispositif selon la revendication 6,
**caractérisé en ce que**
la saillie (12) est pourvue sur sa face extérieure ou intérieure de plusieurs rehaussements (13).

8. Dispositif selon la revendication 7,
**caractérisé en ce que**
les rehaussements (13) sont réalisés sous forme de nervures s'étendant dans la direction périphérique de la manchette (4).

9. Dispositif selon au moins l'une quelconque des revendications 1 à 8,
**caractérisé en ce que**
la manchette (4) est pourvue au moins dans la région avant les extrémités du côté frontal (10, 11) de lèvres périphériques (8).
